(19) Europäisches Patentamt
European Patent Office
Office européen des brevets

(11) EP 2 440 645 B1

(12) EUROPEAN PATENT SPECIFICATION

(45) Date of publication and mention of the grant of the patent:
**11.11.2015 Bulletin 2015/46**

(21) Application number: **10721742.4**

(22) Date of filing: **10.05.2010**

(51) Int Cl.:
***C11D 3/40*** *(2006.01)* ***C09B 69/10*** *(2006.01)*
***D06L 3/12*** *(2006.01)* ***D06P 1/00*** *(2006.01)*

(86) International application number:
**PCT/EP2010/056336**

(87) International publication number:
**WO 2010/142503 (16.12.2010 Gazette 2010/50)**

# (54) CATIONIC DYE POLYMERS

Kationische Farbstoffpolymere

Polymères de colorants cationiques

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 EP 09162563**

(43) Date of publication of application:
**18.04.2012 Bulletin 2012/16**

(73) Proprietors:
- **Unilever PLC**
  **London**
  **EC4Y 0DY (GB)**
  Designated Contracting States:
  **CY GB IE MT**
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO SE SI SK SM TR**

(72) Inventors:
- **BATCHELOR, Stephen, Norman**
  **Wirral Merseyside CH63 3JW (GB)**
- **BIRD, Jayne, Michelle**
  **Wirral Merseyside CH63 3JW (GB)**
- **CHEN, David**
  **Shanghai 200333 (CN)**
- **TAO, Qingsheng**
  **Shanghai 200335 (CN)**
- **WANG, Jinfang**
  **Shanghai 200335 (CN)**

(74) Representative: **Avila, David Victor**
**Unilever Patent Group**
**Colworth House**
**Sharnbrook**
**Bedford**
**MK44 1LQ (GB)**

(56) References cited:
**EP-A- 0 128 619** **EP-A- 1 876 226**
**WO-A-2005/068596** **WO-A-2006/004876**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 440 645 B1

## Description

### FIELD OF INVENTION

The present invention relates to the delivery of dyes polymers to fabrics.

### BACKGROUND OF THE INVENTION

WO2005/003274, to Unilever, discloses that shading dyes may be included in detergent formulations to enhance the whiteness of garments.

WO2006/055787 and WO2009/040731, to Proctor and Gamble, discloses anionic reactive dyes bound to polysaccharide polymers for use in laundry formulations. The reactive dyes used are negatively charged. The shading benefit is found predominately on cellulosic garments.

WO2008/00957 (Ciba) discloses polymer chains with pendant cationic charged dyes for use in hair dyeing.

WO2006/004876 discloses the use on non-polymeric cationic dyes (basic dyes) for shading cotton fabrics.

EP 0128619 discloses water insoluble polystyrene based polymer dyes for providing colour to a hypochlorite composition, the dyes are resistant to bleaching in a hypochlorite solution. The dyes disclosed are anionic or neutral in an aqueous solution at a pH in the range from 7 to 11. The reason the dyes are not bleached is because they are insoluble in the medium.

WO 2005/068596 discloses polymeric violet colourents in which an unidentified proprietary dye is used in the experimental.

WO 2005/003274 discloses that cationic dyes of the classes basic blue and basic violet may be used to shade cotton from laundry detergent compositions.

EP 1876226 to Proctor and Gamble discloses laundry detergent compositions comprising bacterial alkaline enzymes exhibiting endo-beta-1,4-glucanase activity (E.C. 3.2.1.4) and fabric hueing agents.

### SUMMARY OF THE INVENTION

Dye-polymer of the current invention provide shading to a variety of fabrics whilst providing soil removal benefits.

Dyes are coloured molecules having high extinction coefficients in the visible range. Molar extinction coefficients is a standard scientific way to quantify the absorption of light by a molecule.

In one aspect the present invention provides a detergent composition comprising from 2 to 70 wt % of a surfactant together with from 0.0001 to 50 wt% of a dye-polymer of molecular weight of at least 500, wherein the dye-polymer is obtainable by polymerisation of:

(a) a dye monomer, the dye monomer an alkene covalently bound to a cationic charged dye, the dye monomer having a molar extinction coefficient at a wavelength in the range 400 to 700nm of at least 1000 $mol^{-1}$ L $cm^{-1}$, preferably greater than 4000 $mol^{-1}$ L -$cm^{-1}$, and
(b) one or more further alkene comoner(s), the alkene monomer(s) having molar extinction coefficient at a wavelength in the range 400 to 700nm that is less than 100 $mol^{-1}$ L $cm^{-1}$, preferably less than 10 $mol^{-1}$ L $cm^{-1}$, wherein the dye monomer is cationically charged in aqueous solution at a pH in the range from 7 to 11, wherein the dye polymer has a solubility of greater than 1mg/L in a 1g/L sodium dodecyl sulfate aqueous solution at pH=7.

In another aspect the present invention provides a domestic method of treading a textile, the method comprising the steps of:

(i) treating a textile with an aqueous solution of the dye-polymer, the aqueous solution comprising from 10 ppb to 100 ppm of the dye-polymer; and, from 0.0 g/L to 3 g/L of a surfactant;
(ii) optionally rising; and,
(iii) drying the textile.

### DETAILED DESCRIPTION OF THE INVENTION

The detergent composition as described herein is most preferably a granular detergent composition.

### DYE MONOMER

The dye monomer is an organic molecule which when dissolved in an organic solvent has a molar absorption

extinction coefficient of 1000 $mol^{-1}$ L $cm^{-1}$, preferably greater than 4000 $mol^{-1}$ L $cm^{-1}$, most preferably greater than 15 000 $mol^{-1}$ L $cm^{-1}$, at a wavelength in the range 400-700nm, preferably 500-650nm, most preferably 540-600nm.

Molar absorption coefficients are preferably measured in an organic solvent, preferably propan-2-ol, using a 1, 5 or 10cm cell.

The dye monomer is cationically charged in aqueous solution at a pH in the range from 7 to 11. The dye monomer contains at least one quaternary amine group.

Most preferably the cationic charge is delocalised across the aromatic rings of the dye.

Preferably, the dye monomer is of the form:

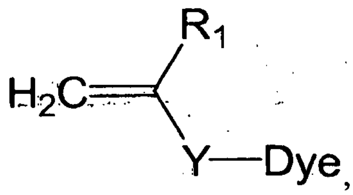

wherein Y is an organic bridging group covalently connecting a dye to the alkene moiety of the dye monomer and $R_1$ is selected from: alkyl; aryl; benzyl; halogen; ester; acid amide; and, CN.

Preferably, the organic bridging group is selected from:-$CONR_4$-; -$NR_4CO$-; -$COOR_4$-; -$NR_4$-; -O-; -S-; -$SO_2$; -$SO_2NR_4$-;-N($COR_4$)-; and -N($SO_2R_4$)-; wherein $R_4$ is selected from: H; C1-C6 branched or linear alkyl; phenyl and benzyl groups; wherein R4 has 0 to 1 spacing units selected from: -O-; -S-; -$SO_2$-; -C(O)O-; -OC(O)-; and an amine. Most preferably, the organic bridging group is -$NR_4CO$- or -$CONR_4$-. Preferably, $R_4$ is selected: from: H and Me.

Preferably, the Y group is bound directly to a carbon atom of an aromatic ring of the dye.

Preferably, $R_1$ is selected from: H; Me; Et; Pr; $CO_2$C1-C4 branched and linear alkyl chains; phenyl; benzyl; CN; Cl; and, F. More preferably, $R_1$ is selected from: H; and, Me.

Preferably, the dye is an organic dye selected from the following chromophore classes: anthraquinone, azo, azine, triphenodioxazine, triphenyl methane, xanthene and phthalocyanin. Most preferred chromophore classes are mono-azo and azine. Of the mono-azo dye class the following are preferred, thiazoliums, isothiazoliums, pyridine and pyridazine dyes. Preferably, the azo group is covalently bound to a benzene ring and para to an -$NHCOC(R_1)=CH_2$ group.

A preferred class per se are azine dyes. Preferred azine dyes are selected from:

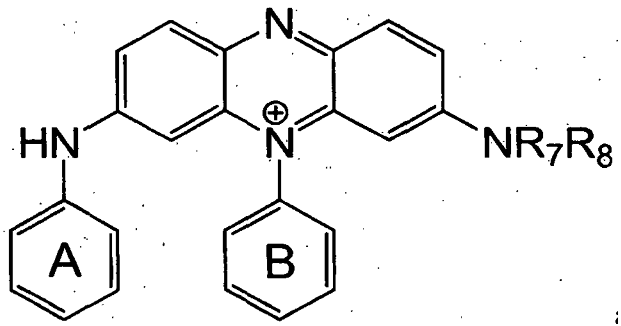

and

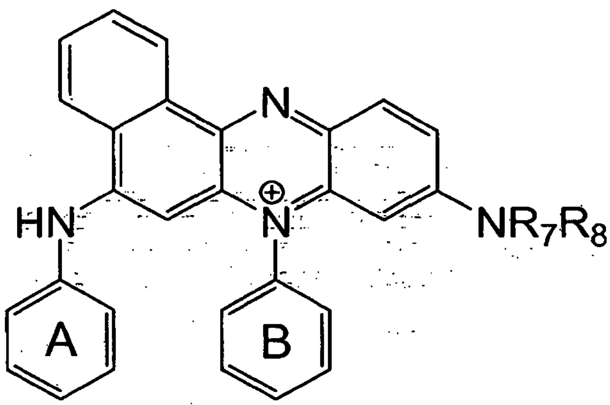

,

wherein $R_7$ and $R_8$ are independently selected from H, C1-C8 branched or linear alkyl, C1-C8; branched or linear alkyl-$NHCOC(R_1)=CH_2$, phenyl, benzyl, $-COC(R_1)=CH_2$; and R7 and R8 may be joined to form a cyclic alkyl amine group, and when $R_7$ and $R_8$ do not contain a branched or linear alkyl-$NHCOC(R_1)=CH_2$ or $-COC(R_1)=CH_2$ group then a -Y-$C(R_1)=CH_2$ is- bound- to the A or B ring. The azine dye may be further substituted with uncharged organic groups.

Preferably, the dye-monomer is selected from: Basic Violet 2; Basic Violet 5; Basic Violet 12; Basic Violet 14; Basic Violet 8; Basic Blue 12; Basic Blue 16; Basic Blue 17; Basic Blue 47; and, Basic Blue 99, wherein the one -NH2 of the dye is converted to $-NH-C(O)-CH=CH_2$ or $-NH-C(O)-C(Me)=CH_2$.

The dye monomer may be further substituted by uncharged organic groups having a total molecular weight of less than 400. Preferred, uncharged organic groups are selected from: $NHCOCH_3$; $CH_3$; $C_2H_5$; $CH_3O$; $C_2H_5O$; amine; Cl; F; Br; I; $NO_2$; $CH_3SO_2$; and, CN.

Most preferably the dye monomer is of the form dye-$N-H-C(O)-CH=CH_2$ for dye-$NH-C^{-}(O)-C(Me)=CH_2$. Most preferably the dye monomer is formed by reaction of a dye containing an $NH_2$ group with acryloyl chloride (2-propenoyl chloride) or methacryloyl chloride (2-methylprop-2-enoyl chloride).

An alternative preferred route to form a dye monomer is via reaction of the amin groups of a dye with an alkene bearing a pendant epoxide group. For example:

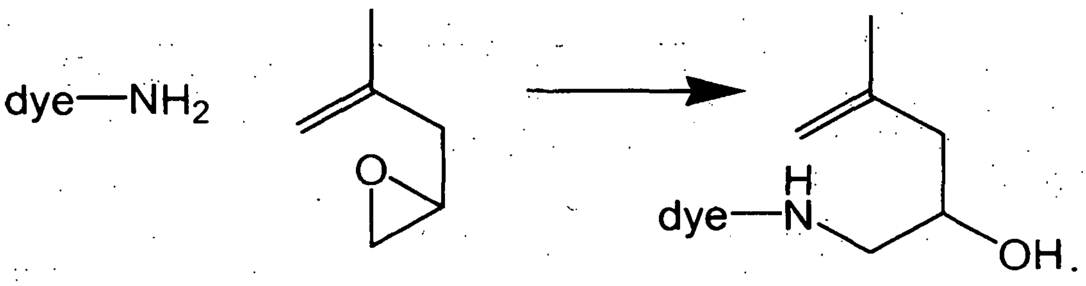

Preferred dye monomers include:

| | |
|---|---|
| 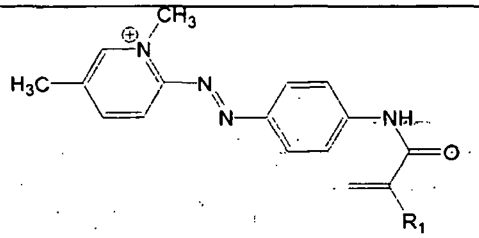 | 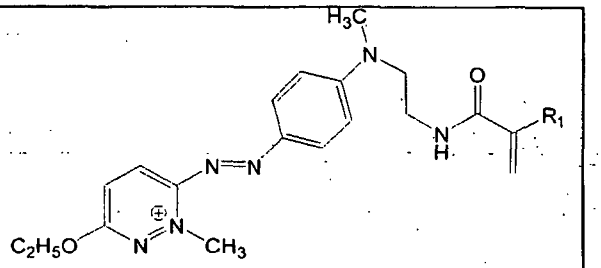 |
| 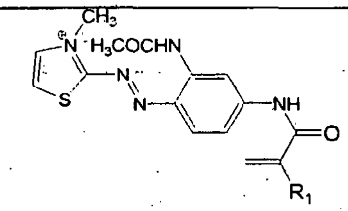 | 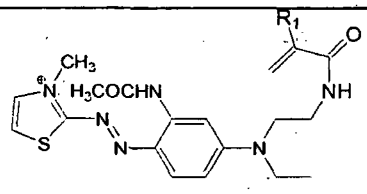 |
| 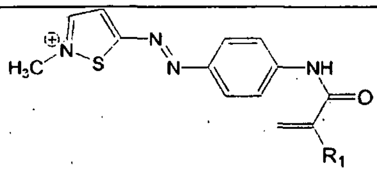 | 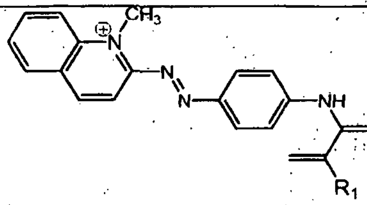 |
| 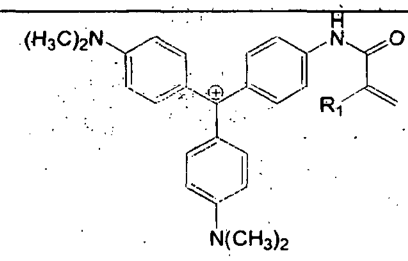 | 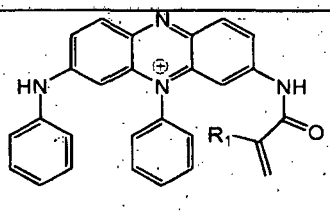 |
| 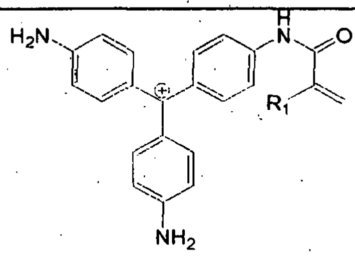 | 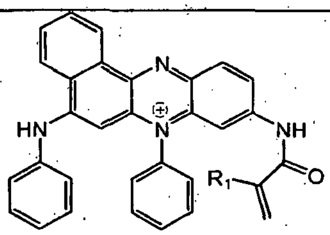 |

ALKENE COMONOMERS

The alkene co-monomer may be selected from any suitable alkene. The comonomer is preferably of the form:

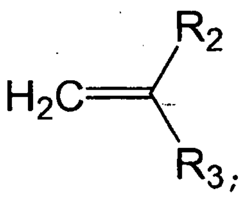 ; and, 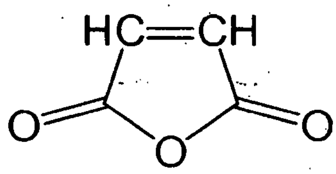 ,

wherein $R_2$ and $R_3$ are independently selected from: H, C1-C8 branched, cyclic and linear alkyl chains, C(O)OH, $CO_2$C1-C18 branched and linear alkyl chains, -C(O)N (C1-C18)2; -C(O)N(C1-C18)H; -C(O)NH2; heteroaromatic, phenyl, benzyl, polyether, cyano, Cl and F. Where C1-C18 is specified a preferred range is C1 to C4.

The $R_2$ and $R_3$ of the comonomer may be further substituted by charged and uncharged organic groups having a total molecular weight of less than 400. Preferred uncharged organic groups are selected from: $NHCOCH_3$, $CH_3$, $C_2H_5$,

OH, $CH_3O$, $C_2H_5O$, amine, Cl, F, Br, I, $NO_2$, $CH_3SO_2$, and CN.

The phenyl, benzyl and alkyl chains may be substituted by further organic groups selected from: OH; F; Cl; alkoxy (preferably $OCH_3$), $SO_3^-$, COOH, amine, quaternary amine, acid amide and ester. When phenyl or benzyl groups are present, the aromatic is not substituted by OH.

Where the alkyl has not been specified, C1 to C4 branched or linear is preferred.

Examples of suitable co-monomers include. Examples of suitable co-monomers include. Preferred co-monomer are indicated.

| | | |
|---|---|---|
| 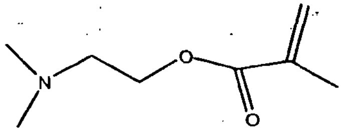 DMAEMA<br>Preferred | 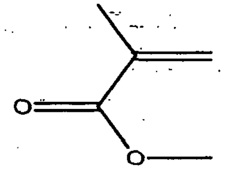 methyl methacrylate | 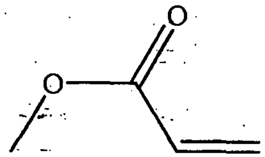 methyl acrylate |
| 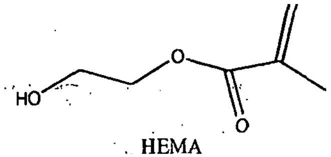 HEMA<br>Preferred | 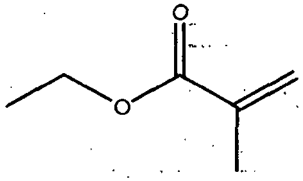 ethyl methacrylate | 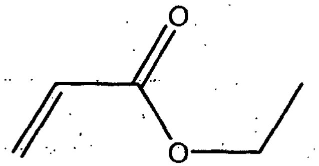 ethyl acrylate |
| 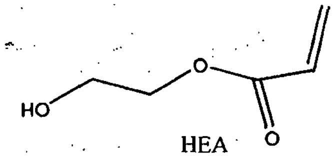 HEA<br>Preferred | 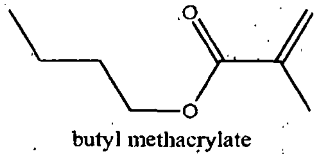 butyl methacrylate | 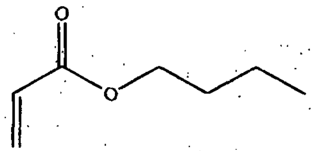 butyl acrylate |
| 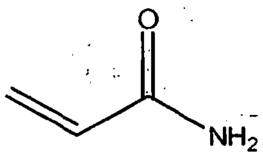 acryl amide<br>Preferred | 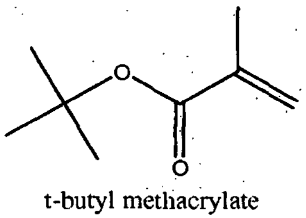 t-butyl methacrylate | 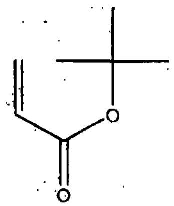 t-butyl acrylate |
| 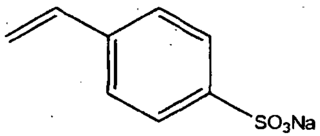 sodium 4-vinylbenzenesulfonate<br>Preferred | 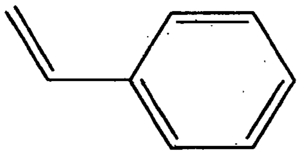 styrene | 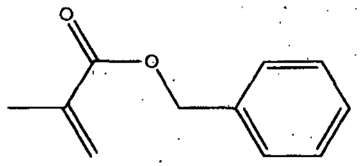 benzyl methacrylate |

(continued)

| | | |
|---|---|---|
| 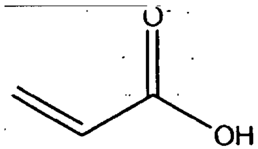 acrylic acid Preferred | 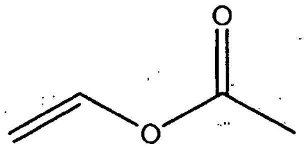 vinyl acetate | 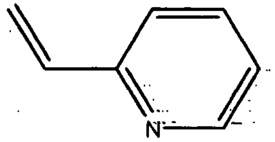 vinyl pyridine |
| 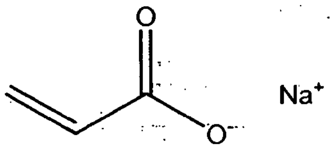 sodium acrylic acid preferred | 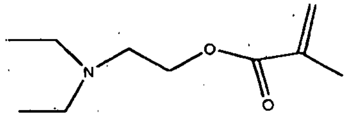 DEAEMA preferred | 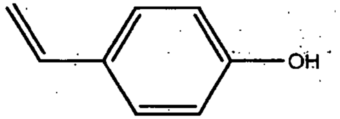 4-vinylphenol |
| 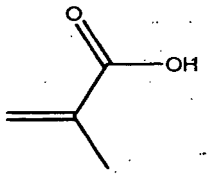 methacrylic acid Preferred | 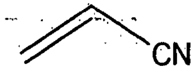 acrylonitrile | 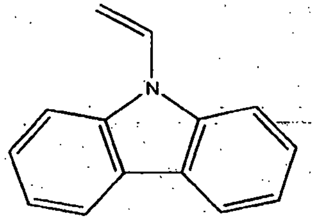 9-vinyl-9*H*-carbazole |
| 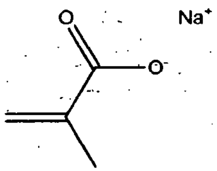 sodium methacrylic acid Preferred | 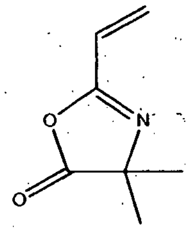 4,4-dimethyl-2-vinyloxazol-5(4*H*)-one | 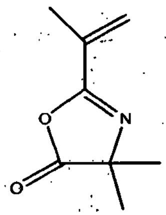 4,4-dimethyl-2-(prop-1-en-2-yl)oxazol-5(4*H*)-one |

(continued)

| | | |
|---|---|---|
| 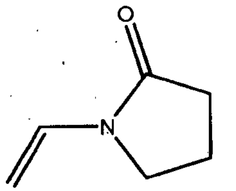 vinyl pyrrolidone<br>Preferred | 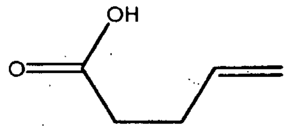 4-Pentenoic acid | 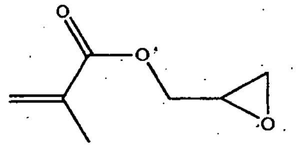 glycidyl methacrylate |
| 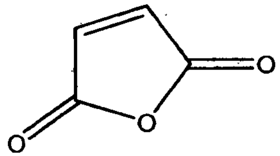 Maleic anhydride | 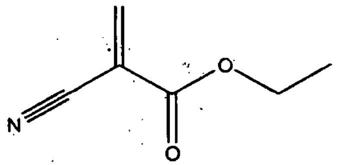 Ethyl 2-cyanoacrylate | 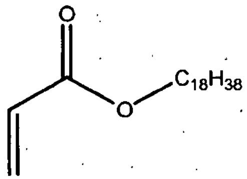 stearyl acrylate |
| Preferred | | |
| 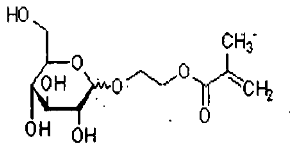 Glycosyloxyethyl methacrylate | 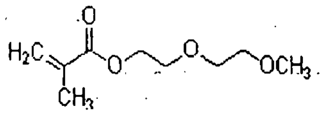 Di(ethylene glycol) methyl ether methacrylate | 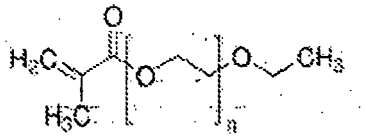 Poly(ethylene glycol) ethyl ether methacrylate |
| 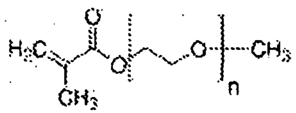 Poly(ethylene glycol) methyl ether methacrylate | 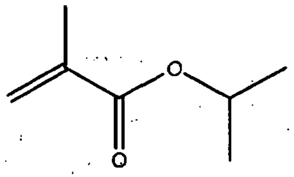 isopropyl methacrylate | 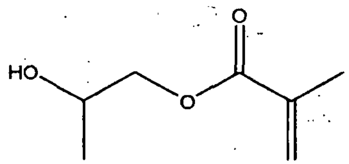 2-hydroxypropyl methacrylate |

(continued)

| | | |
|---|---|---|
| 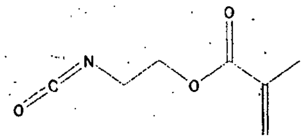 2-Isocyanatoethyl methacrylate | 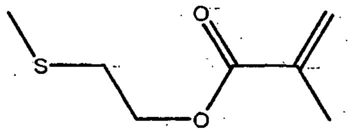 2-(Methylthio)ethyl methacrylate | 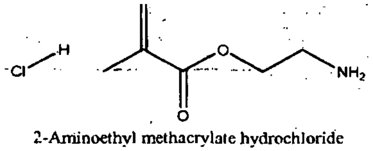 2-Aminoethyl methacrylate hydrochloride<br>Preferred |
| 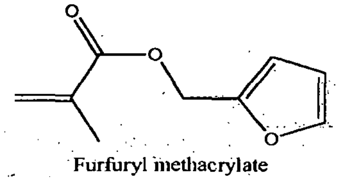 Furfuryl methacrylate | 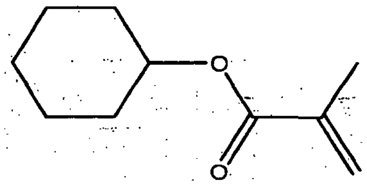 Cyclohexyl methacrylate | 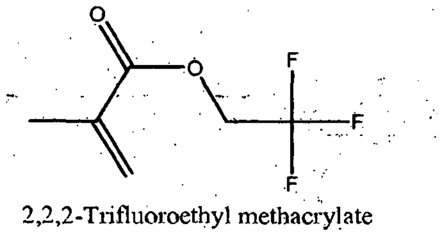 2,2,2-Trifluoroethyl methacrylate |
| 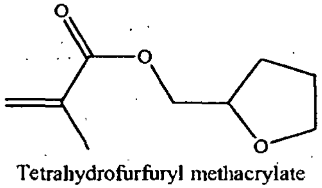 Tetrahydrofurfuryl methacrylate | 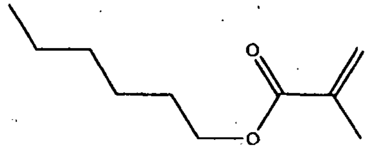 Hexyl methacrylate | 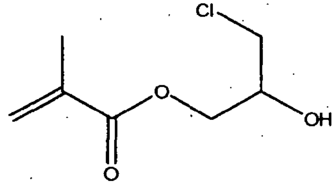 3-Chloro-2-hydroxypropyl methacrylate |
| 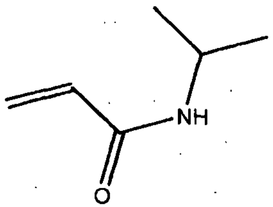 *N*-isopropylacrylamide<br>Preferred | 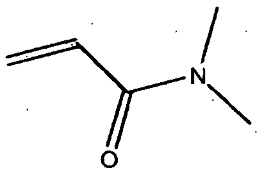 *N,N*-dimethylacrylamide<br>preferred | 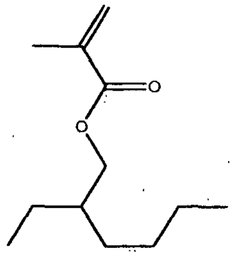 2-ethylhexyl methacrylate |

(continued)

| | | |
|---|---|---|
| 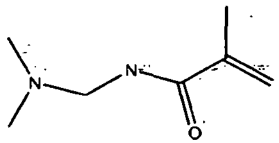<br>2-(dimethylamino)ethyl methacrylamide<br>preferred | 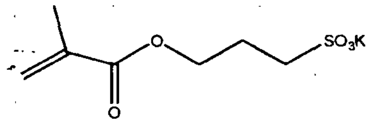<br>Potassium 3-sulfopropyl methacrylate<br>preferred | 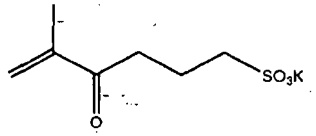<br>potassium 5-methyl-4-oxohex-5-ene-1-sulfonate<br>preferred |
| 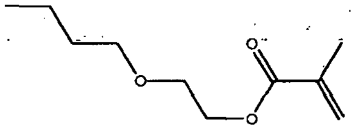<br>2-Butoxyethyl methacrylate | 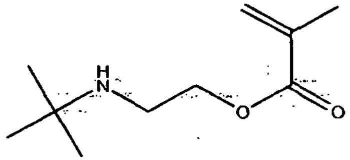<br>2-(tert-Butylamino)ethyl methacrylate | 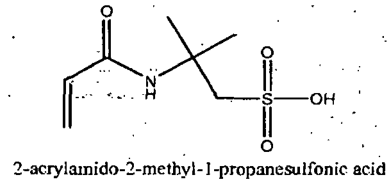<br>2-acrylamido-2-methyl-1-propanesulfonic acid |
| 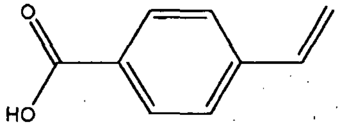<br>4-vinylbenzic acid<br>preferred | 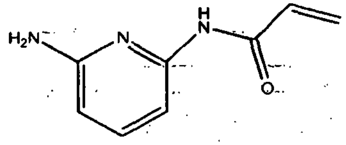<br>*N*-(6-aminopyridin-2-yl)acrylamide | 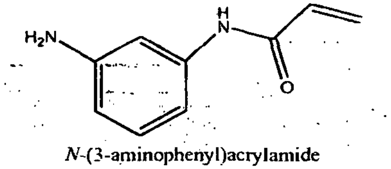<br>*N*-(3-aminophenyl)acrylamide |
| 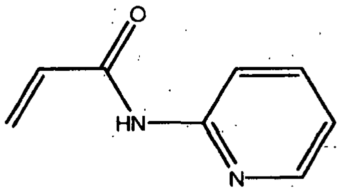<br>2-acrylamido pyridine | 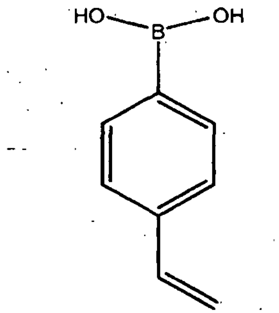<br>4-vinylphenylboronic acid | 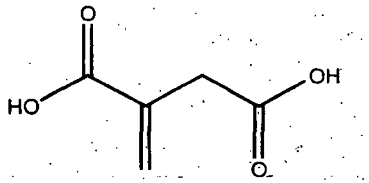<br>Itaconic acid<br>preferred |

(continued)

| | | |
|---|---|---|
| 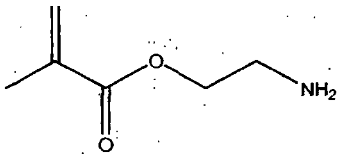 2-AMINOETHYL methacrylate Preferred | 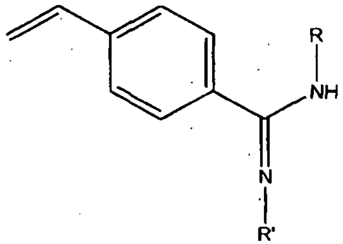 preferred | 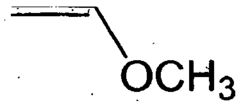 preferred |

Mixtures of co-monomer may be used. It is preferred that the >50wt%, more preferably >80wt%, of the co-monomers are selected from co-monomer that have a molecular weight of less than 300 and contains an amine, amide, OH, $OCH_3$ $SO_3^-$ or $COO^-$ group. Most preferably, the co-monomers contain an amine or $OCH_3$ group.

Most preferably >50wt%, preferably >80wt%, of the comonomers are acrylates with pendant tertiary amine groups, most preferably selected from DMAEMA and DEAEMA.

Additional comonomer may be added to the polymer which are covalently bound to radical photobleaches such as vitamin K3 or 2-ethyl anthraquinone. Other organic active ingredients such as sunscreens, antifungal agents, bleach catalysts, antimicrobial, antiwrinkle may also be covalently linked to the polymer. Examples of such ingredients are 5-chloro-2-(2,4-dichlorophenoxy)phenol, 6-acetoxy-2,4-dimethyl-m-dioxane, para-aminobenzoic acid, diethanolamine-*p*-methoxy cinnamate and oxybenzone. Most preferably the ingredient contains an $NH_2$ group and the monomer is created in an analogous manner to the dye monomer. These are preferably present at a lower level than the dye.

<u>DYE POLYMER</u>

Preferably, the dye polymer is blue or violet in colour. Preferably the dye polymer gives a blue or violet colour to the cloth with a hue angle of 240 to 345, more preferably 265 to 330, most preferably 270 to 300. The cloth used to determine the hue angle is white bleached non-mercerised woven cotton sheeting.

The polymer is obtainable by co-polymerisation of the dye monomer with suitable unsaturated organic co-monomers. Preferably the polymer contains 0.1 to 30 Molar% dye monomers units, more preferably 1 to 15 Molar% dye monomers units, most preferably 2 to 10 Molar%.

Preferably the polymer contains less than 20 Molar%, more preferably less than 5 Molar% of co-monomers bearing COOH or $SO_3^-$ groups.

The monomers within the polymer may be arranged in any suitable manner. For example as Alternating copolymers possess regularly alternating monomer residues; Periodic copolymers have monomer residue types arranged in a repeating sequence; Random copolymers have a random sequence of monomer residue types; Statistical copolymers have monomer residues arranged according to a known statistical rule; Block copolymers have two or more homopolymer subunits linked by covalent bonds. Most preferably the polymer is a random copolymer. The polymer should have a molecular weight 500 and greater, preferably 2000 and greater, preferably 5000 and greater. In this context the molecular weight is the number average molecular weight. This is the ordinary arithmetic mean of the molecular weights of the individual macromolecules. It is determined by measuring the molecular weight of *j* polymer molecules, summing the weights, and dividing by *j*. Molecular weights are determined by Gel Permeations Chromatography.

The dye polymer has a solubility of greater than 10mg/L in a 1g/L sodium dodecyl sulfate solution at pH=7. Water solubility is enhanced by the presence of hydroxy, amino and charged groups in the polymer, preferably anionic charged groups.

Preferably the polymer is of the form:

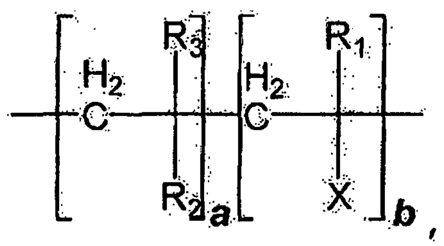

wherein X = Y-Dye.

Preferably, a is greater than b (a>b). More preferably the ratio a:b is from 99.9:0.1 to 70:30.

It is preferred that the dye-polymer has la number average molecular weight in the range from 500 to 500000, preferably from 2000 to 100000, more preferably 5000 to 50000.

For addition to a granular formulation the polymer dye may be added to the slurry to be spray dried or preferably added via post-dosed granules.

In a preferred embodiment the polymer dye powder obtained from the polymer dye synthesis is mixed with a $Na_2SO_4$ or NaCl or pre-prepared granular base or full detergent formulation to give a 0.1 to 20 polymer dye wt% mixture. This dry mix is then mixed into the granular formulation. The polymer dye powder is preferably formed by drying a liquid slurry or solution of the dye, for example by vacuum drying, freeze drying, drying in drum dryers, Spin Flash ® (Anhydro), but most preferably by spray drying. The polymer dye powder may be ground before, during or after the making of the slurry. This grinding is preferably accomplished in mills, such as for example ball, swing, bead or sand mills, or in kneaders.

Other ingredients such as dispersants or alkali metal salts may be added to the liquid slurry. The polymer dye

powder preferably contains 20 to 100 wt% of the dye.

Preferably, the polymer dye powder has an average particle size, APS, from 0.1 to 300 microns, preferably 10 to 100 microns. Preferably this is as measured by a laser diffraction particle size analyser, preferably a Malvern HP with 100 mm lens.

SURFACTANT

The composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which shows resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts.in the range from about 5% to about 40 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

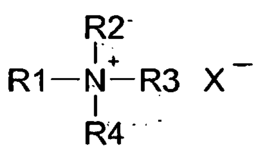

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently

selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %. The softening material is preferably present in an amount of from 2 to 60% by weight of the total composition, more preferably from 2 to 40%, most preferably from 3 to 30% by weight.

The composition optionally comprises a silicone.

BUILDERS OR COMPLEXING-AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder,materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered' silicates (e.g. SKS-6 from Hoechst).

Preferably the laundry detergent formulation is.a non-phosphate built laundry detergent formulation, i.e., contains less than 1 wt% of phosphate.

FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.0.2 g/l.

PERFUME

Preferably the composition comprises a perfume. The perfume is preferably in the range from 0.001 to 3 wt %, most preferably 0.1 to 1 wt %. Many suitable examples of perfumes are provided in the CTFA- (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol. Perfume and top note may be used to cue the whiteness benefit of the invention.

It is preferred that the laundry treatment composition does not contain a peroxygen bleach, e.g., sodium percarbonate, sodium perborate, and peracid.

POLYMERS

The composition may comprise one or more polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

The laundry treatment composition may contain an enzyme. Preferred enzymes are disclosed in WO 2007/087243 and WO 2007/087257.

**Examples**

**Example 1 Polymer Synthesis**

The dye monomer shown in the scheme below was prepared by the reaction of methylene violet RAX and acryloyl chloride in the presence of sodium dicarbonate.

Dye polymers were created via radical polymerisation of the dye monomer with dimethyl amino ethyl methacrylate (DMAEMA) according to the reaction scheme:

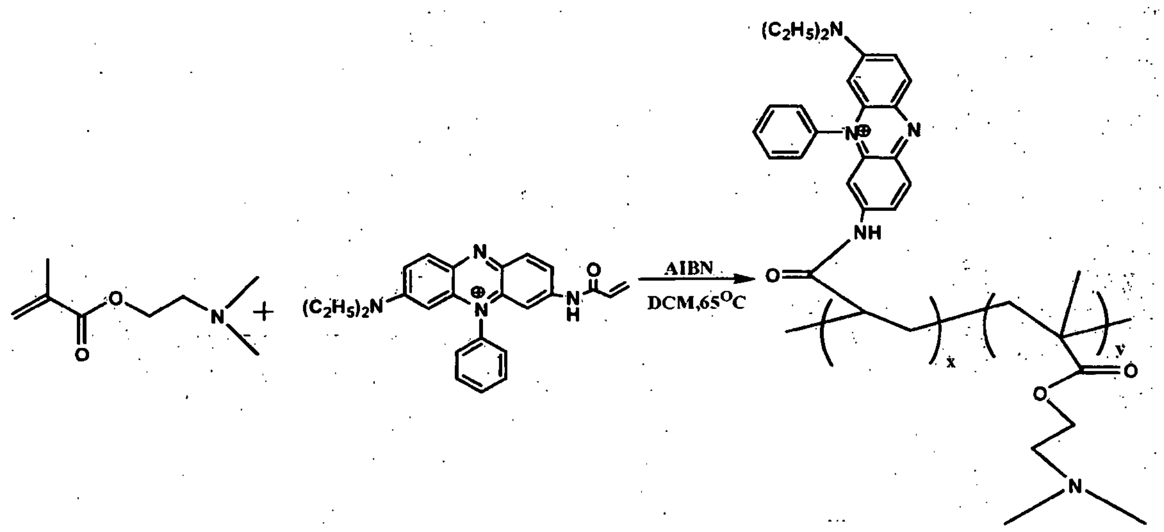

**Example 2 UV-VIS spectroscopy**

The UV-Vis spectra of the dye polymers of example 1 were recorded in demineralised water at 1g/L dye polymer. The UV-Vis spectra of the dye polymers of example 3 were recorded in demineralised water at 1g/L dye polymer and containing 1g/L of linear alkly benzene sulphonate surfactant (LAS). The results are given in the tables below and an identifying code given to each polymer.

| Monomer added | Dye-monomer added | code | $\lambda$max in range 400-700nm | Absorbance (1cm) @ $\lambda$max for 1g/L |
|---|---|---|---|---|
| 99 | 1 | C13 | 557 | 0.45 |
| 98 | 2 | C14 | 557 | 1.29 |
| 95 | 5 | C15 | 557 | 2.31 |
| 90 | 10 | C16 | 557 | 4.37* |
| * measured at 50% dilution | | | | |

**Example 3: Dye deposition experiments**

Knitted white polyester (microfiber), knitted nylon-elastane (80:20) and white woven non-mercerised cotton fabrics were used together in 4g/L of a detergent which contained 15% Linear Alkyl benzene sulfonate (LAS) surfactant, 30% $Na_2CO_3$, 40% NaCl, remainder minors included calcite and fluorescer and moisture. Washes were conducted in 6° French Hard water at room temperature with a liquor to cloth ratio of 30:1, for 30 minutes. This was then repeated once more to accomplish 2 washes in total. Following the washes the cloths were rinsed twice in water, dried, their reflectance spectrum measured on a reflectometer and the colour expressed as CIE L* a* b* values (UV-excluded).
The experiment was repeated with the addition of the dye polymers of example 2. The polymers were added to give 5ppm in the wash solution. The deposition of the dye-polymers to the fabrics was expressed as the $\Delta$b value such that

$$\Delta b = b(\text{control}) - b(\text{dye polymer})$$

+ve values indicate a blueing of the fabric, due to dye-polymer deposition.

| Dye-polymer | $\Delta$b 2$^{nd}$ wash | | |
|---|---|---|---|
| | Cotton | Nylon elastane | polyester |
| C13 | 0.1 | 0.1 | 0.2 |
| C14 | 0.6 | 0.6 | 0.5 |
| C15 | 1.4 | 0.8 | 0.5 |
| C16 | 2.1 | 1.2 | 0.8 |

The dye-polymers deposit to nylon-elastane, cotton and polyester fabrics.
An added advantage is that the dye-polymer also facilitates soil removal and alter fabric feel.

**Example 4: Soil Removal**

Knitted white polyester (microfiber), white woven non-mercerised cotton fabrics and a sebum stain monitor [WFK 10 D (Cotton). (Supplied by WFK-Testgewebe GmbH, Adlerstr. 42, D-4150)] were washed together in 4g/L of a detergent which contained 15% Linear Alkyl benzene sulfonate (LAS) surfactant, 30% $Na_2CO_3$, 40% NaCl, remainder minors included calcite and fluorescer and moisture. Washes were conducted in 6° French Hard water at room temperature with a liquor to cloth ratio of 30:1, for 30 minutes. Following the washes the cloths were rinsed twice in water, dried, their reflectance spectrum measured on a reflectometer (UV-excluded).
The experiment was repeated with the addition of 1ppm in the wash solution of dye polymer C15 of example 3.
The soil removal on the WFK10D cloth was measured as the change in %Reflectance at 460nm before and

after washing: $\Delta R_{460} = R_{460}$ (after wash) - $R_{460}$ (before wash).

The experiments were repeated 4 times and the average values of $\Delta R_{460}$ calculated. The results were
$\Delta R_{460}$ (control) = 5.1
$\Delta R_{460}$ (C15) = 5.8

The increase in $\Delta R_{460}$ for C15 cannot be due to dye deposition. Colouring of the cloth by the dye will reduce $\Delta R_{460}$ as the dye reduces the base reflectance due to absorption of light. The dye polymer C15 increases the soil removal.

**Exemplary Base Powder Formulations A, B, C and D**

| Formulation | A | B | C | D |
|---|---|---|---|---|
| NaLAS | 15 | 20 | 10 | 14 |
| NI (7EO) | - | - | - | 10 |
| Na tripolyphosphate | - | 15 | - | - |
| Soap | - | - | - | 2 |
| Zeolite A24 | 7 | - | - | 17 |
| Sodium silicate | 5 | 4 | 5 | 1 |
| Sodium carbonate | 25 | 20 | 30 | 20 |
| Sodium sulphate | 40 | 33 | 40 | 22 |
| Carboxymethylcellulose | 0.2 | 0.3 | - | 0.5 |
| Sodium chloride | - | - | - | 5 |
| Lipase | 0.005 | 0.01 | - | 0.005 |
| Protease | 0.005 | 0.01 | - | 0.005. |
| Amylase | 0.001 | 0.003 | - | - |
| Cellulase | - | 0.003 | - | - |
| Acid Violet 50 | 0.0015 | 0.002 | - | - |
| Disperse violet 28 | 0.001 | - | 0.002 | - |
| C15(see example 2) | 0.0125 | 0.018 | 0.0085 | 0.020 |
| Fluorescer | 0.1 | 0.15 | 0.05 | 0.3 |
| Water/impurities/ minors | remainder | remainder | remainder | remainde r |
| Disperse violet 28 is Dianix Brill Violet B, ex DyStar,as received. | | | | |

**Exemplary Base Liquid Formulations A, B, C and D**

| Formulation | A | B | C | D |
|---|---|---|---|---|
| NaLAS | 14 | 10 | 15 | 21 |
| NI (7EO) | 10 | 5 | 21 | 15 |
| SLES (3EO) | 7 | 10 | 7 | - |
| Soap | 2 | 4 | 1 | 0 |
| Citric acid | 1 | 1 | - | 1 |
| Glycerol | 0 | 1 | 5 | 0 |
| Propylene glycol | 5 | 3 | 0 | 4 |
| Sodium chloride | 1 | - | - | - |
| Amine ethoxylated polymers | 0.5 | 1 | - | - |
| Triethanol amine | 0 | 0.5 | 3- | 1 |

(continued)

| Formulation | A | B | C | D |
|---|---|---|---|---|
| Perfume | 0.2 | 0.1 | 0.3 | 0.4 |
| Protease | 0.005 | 0.01 | - | 0.005 |
| Amylase | 0.001 | 0.003 | - | - |
| Lipase | - | 0.003 | - | - |
| Fluorescer | 0.1 | 0.15 | 0..05 | 0.3 |
| C15 (see example 2) | 0.005 | 0.02 | 0.01 | 0.0125 |
| Solvent Violet 13 | - | 0.0005 | 0 | 0.001 |
| Water/impurities/ minors | remainder | remainder | remainder | remainder |

For both powder and liquids formulations, enzyme levels are given as percent pure enzyme. NI(7EO) refers to R-$(OCH_2CH_2)_nOH$, where R is an alkyl chain of C12 to C15, and n is 7. NaLAS is linear alkyl benzene sulphonate (LAS) and (SLES(3EO)) is $C_{12}$-$C_{18}$ alkyl polyethoxylate (3.0) sulphate. Formulations were made using Lipex as the lipase, Savinase and Polarzyme and the protease, Carezyme as the cellulose and Stainzyme as the amylase.

## Claims

1. A detergent composition comprising from 2 to 70 wt % of a surfactant together with from 0.0001 to 50 wt% of a dye-polymer of molecular weight of at least 500, wherein the dye-polymer is obtainable by polymerisation of:

   (a) a dye monomer, the dye monomer an alkene covalently bound to a cationic charged dye, the dye monomer having a molar extinction coefficient at a wavelength in the range 400 to 700nm of at least 1000 $mol^{-1}$ L $cm^{-1}$, preferably greater than 4000 $mol^{-1}$ L $cm^{-1}$, and
   (b) one or more further alkene comonomer(s), the alkene monomer(s) having molar extinction coefficient at a wavelength in the range 400 to 700nm that is less than 100 $mol^{-1}$ L $cm^{-1}$, preferably less than 10 $mol^{-1}$ L $cm^{-1}$, wherein the dye monomer is cationically charged in aqueous solution at a pH in the range from 7 to 11, wherein the dye polymer has a solubility of greater than 1mg/L in a 1g/L sodium dodecyl sulfate aqueous solution at pH=7.

2. A detergent composition according to claim 1, wherein the dye monomer is of the form:

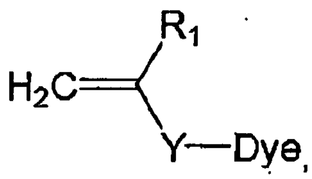

   wherein Y is an organic bridging group covalently connecting a dye to the alkene moiety of the dye monomer and $R_1$ is selected from: alkyl; aryl; benzyl; halogen; ester; acid amide; and, CN.

3. A detergent composition according to claim 2, wherein the organic bridging group, Y, is selected from: -$CONR_4$-; -$NR_4CO$-; -$COOR_4$-;-$NR_4$-; -O-; -S-;-$SO_2$-; -$SO_2NR_4$-; -N($COR_4$)-; and -N($SO_2R_4$)-; wherein $R_4$ is selected from: H; C1-C6 branched or linear alkyl; phenyl and benzyl groups; wherein R4 has 0 to 1 spacing units selected from: -O-; -S-; -$SO_2$-; -C(O)O-; -OC(O)-; and an amine.

4. A detergent composition according to claim 2, wherein the organic bridging group is -$NR_4CO$- or -$CONR_4$-.

5. A detergent composition according to any one of claims 3 to 4, wherein $R_4$ is selected: from: H and Me.

6. A detergent composition according to any one of claims 2 to 5, wherein the Y group is bound directly to a carbon

atom of an aromatic ring of the dye.

7. A detergent composition according to any one of the preceding claims, wherein the dye is an organic dye selected from the following chromophore classes: anthraquinone, azo, azine, triphenodioxazine, triphenyl methane, xanthene and phthalocyanin.

8. A detergent composition according to claim 7, wherein the organic dye is selected from the following chromophore classes: mono-azo and azine.

9. A detergent composition according to any one of claims 2 to 8, wherein $R_1$ is selected from: H; Me; Et; Pr; $CO_2$C1-C4 branched and linear alkyl chains; phenyl; benzyl; CN; Cl; and, F.

10. A detergent composition according to claim 9, wherein $R_1$ is selected from: H; and Me.

11. A detergent composition according to any one of the preceding claims, wherein the dye-monomer is selected from: Basic Violet 2; Basic Violet 5; Basic Violet 12; Basic Violet 14; Basic Violet 8; Basic Blue 12; Basic Blue 16; Basic Blue 17; Basic Blue 47; and, Basic Blue 99, wherein the one -NH2 of the dye is converted to -NH-C(O)-CH=CH2 or -NH-C(O)-C(Me)=CH2.

12. A detergent composition according to claim 8, wherein the mono-azo dye is selected from the group consisting of: thiazoliums, isothiazoliums, pyridine and pyridazine dyes.

13. A detergent composition according to claim 12, wherein the azo group is covalently bound to a benzene ring and para to an -NHCOC(R1)=$CH_2$ group.

14. A detergent composition according to claim 8, wherein the dye is an azine dye.

15. A detergent composition according to claim 14, wherein the azine dye is selected from:

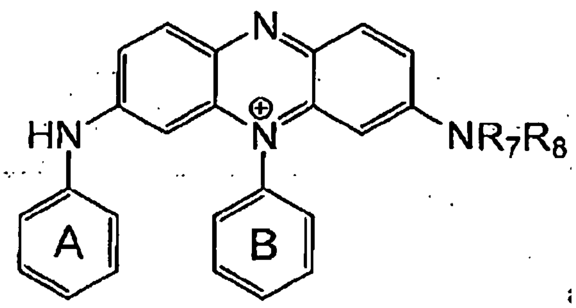

;

and

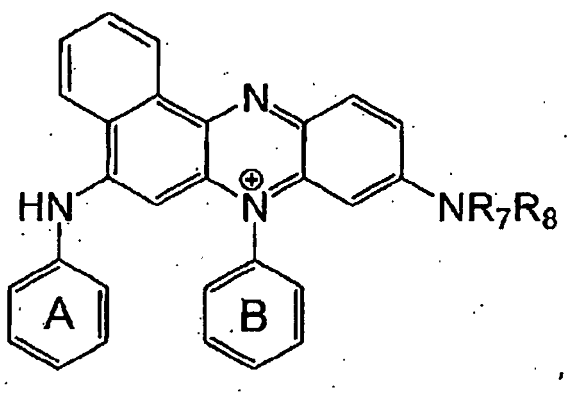

,

wherein $R_7$ and $R_8$ are independently selected from H, C1-C8 branched or linear alkyl, C1-C8 branched or linear alkyl-NHCOC($R_1$)=$CH_2$, phenyl, benzyl, -COC($R_1$)=$CH_2$, and R7 and R8 may be joined to form a cyclic alkyl amine

group, and when $R_7$ and $R_8$ do not contain a branched or linear alkyl-NHCOC($R_1$)=$CH_2$ or -COC($R_1$)=$CH_2$ group then a -Y-C($R_1$)=$CH_2$ is bound to the A or B ring.

**16.** A detergent composition according to any preceding claim, wherein the dye monomer is further substituted by uncharged organic groups having a total molecular weight of less than 400.

**17.** A detergent composition according to claim 16, wherein the uncharged organic groups are selected from: $NHCOCH_3$; $CH_3$; $C_2H_5$; $CH_3O$; $C_2H_5O$; amine; Cl; F; Br; I; $NO_2$; $CH_3SO_2$; and, CN.

**18.** A detergent composition according to any one of the preceding claims, wherein the comonomer is selected from:

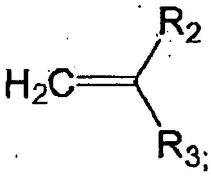 ; and, 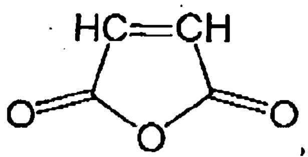 ,

wherein $R_2$ and $R_3$ are independently selected from: H, C1-C8 branched, cyclic and linear alkyl chains. C(O)OH, $CO_2$C1-C18 branched and linear alkyl chains, -C(O)N (C1-C18)2; -C(O)N(C1-C18)H;-C(O)NH2; heteroaromatic, phenyl, benzyl, polyether, cyano, Cl and F.

**19.** A detergent composition according to claim 18, wherein $R_2$ and $R_3$ of the comonomer is further substituted by groups selected from: charged; and, uncharged organic, the further groups having a total molecular weight of less than 400.

**20.** A detergent composition according to any one of the preceding claims, wherein detergent composition comprises a fluorescent agent.

**21.** A domestic method of treating a textile, the method comprising the steps of:

(i) treating a textile with an aqueous solution of the dye-polymer as defined in any one of claims 1 to 19, the aqueous solution comprising from 10 ppb to 100 ppm of the dye-polymer; and, from 0.0 g/L to 3 g/L of a surfactant;
(ii) optionally rinsing; and,
(iii) drying the textile.

**22.** A domestic method of treating a textile according to claim 21, wherein the aqueous solution comprises from 0.3 to 2 g/L of a surfactant.

**Patentansprüche**

**1.** Waschmittelzusammensetzung, umfassend 2 bis 70 Gew.-% eines Tensids zusammen mit 0,0001 bis 50 Gew.-% eines Farbstoffpolymers mit einem Molekulargewicht von mindestens 500, wobei das Farbstoffpolymer erhältlich ist durch Polymerisation von:

(a) einem Farbstoffmonomer, wobei beim Farbstoffmonomer ein Alkenrest kovalent an einen kationisch geladenen Farbstoff gebunden ist, wobei das Farbstoffmonomer einen molaren Extinktionskoeffizienten bei einer Wellenlänge im Bereich von 400 bis 700 nm von mindestens 1000 $mol^{-1}$ L $cm^{-1}$ und vorzugsweise von mehr als 4000 $mol^{-1}$ L $cm^{-1}$ aufweist, und
(b) einem oder mehreren weiteren Alkencomonomeren, wobei das oder die Alkenmonomeren einen molaren Extinktionskoeffizienten bei einer Wellenlänge im Bereich von 400 bis 700 nm von weniger als 100 $mol^{-1}$ L $cm^{-1}$ und vorzugsweise von weniger als 10 $mol^{-1}$ L $cm^{-1}$ aufweisen, wobei das Farbstoffmonomer in einer wässrigen Lösung mit einem pH-Wert im Bereich von 7 bis 11 kationisch geladen ist, wobei das Farbstoffpolymer eine Löslichkeit von mehr als 1 mg/L in einer wässrigen 1 g/L-Lösung von Natriumdodecylsulfat vom pH-Wert 7 aufweist.

**2.** Waschmittelzusammensetzung nach Anspruch 1, wobei das Farbstoffmonomer die folgende Formel aufweist

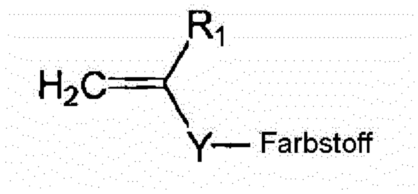

wobei Y eine organische Brückengruppe, die einen Farbstoff kovalent an den Alkenrest des Farbstoffmonomers bindet, bedeutet und $R_1$ ausgewählt ist aus Alkyl; Aryl; Benzyl; Halogen; Ester; Säureamid; und CN.

**3.** Waschmittelzusammensetzung nach Anspruch 2, wobei die organische Brückengruppe Y ausgewählt ist aus -CON$R_4$; -N$R_4$CO-; -COO$R_4$-; -N$R_4$-; -O-; -S-; -$SO_2$-; -$SO_2$N$R_4$-; -N(CO$R_4$)-; und -N($SO_2R_4$)-; wobei $R_4$ ausgewählt ist aus H; verzweigten oder linearen C1-C6-Alkyl-, Phenyl- und Benzylgruppen; wobei $R_4$ 0 bis 1 Abstandshaltergruppen aufweist, die aus -O-; -S-; -$SO_2$-; -C(O)O-; -OC(O)-; und einem Amin ausgewählt sind.

**4.** Waschmittelzusammensetzung nach Anspruch 2, wobei es sich bei der organischen Brückengruppe um -N$R_4$CO- oder -CON$R_4$- handelt.

**5.** Waschmittelzusammensetzung nach einem der Ansprüche 3 bis 4, wobei $R_4$ ausgewählt ist aus H und Me.

**6.** Waschmittelzusammensetzung nach einem der Ansprüche 2 bis 5, wobei die Y-Gruppe direkt an ein Kohlenstoffatom eines aromatischen Rings des Farbstoffes gebunden ist.

**7.** Waschmittelzusammensetzung nach einem der vorstehenden Ansprüche, wobei der Farbstoff ein organischer Farbstoff ist, der aus den folgenden Chromophorklassen ausgewählt ist: Anthrachinon, Azo, Azin, Triphenodioxazin, Triphenylmethan, Xanthen und Phthalocyanin.

**8.** Waschmittelzusammensetzung nach Anspruch 7, wobei der organische Farbstoff aus den folgenden Chromophorklassen ausgewählt ist: Monoazo und Azin.

**9.** Waschmittelzusammensetzung nach einem der Ansprüche 2 bis 8, wobei $R_1$ ausgewählt ist aus H; Me; Et; Pr; verzweigten und linearen $CO_2$C1-C4-Alkylketten; Phenyl; Benzyl; CN; Cl und F.

**10.** Waschmittelzusammensetzung nach Anspruch 9, wobei $R_1$ ausgewählt ist aus: H; und Me.

**11.** Waschmittelzusammensetzung nach einem der vorstehenden Ansprüche, wobei das Farbstoffmonomer ausgewählt ist aus: basischem Violett 2; basischem Violett 5; basischem Violett 12; basischem Violett 14; basischem Violett 8; basischem Blau 12; basischem Blau 16; basischem Blau 17; basischem Blau 47; und basischem Blau 99; wobei die eine -NH2-Gruppe des Farbstoffes umgewandelt ist in -NH-C(O)-CH=CH2 oder -NH-C(O)-C(Me)=CH2.

**12.** Waschmittelzusammensetzung nach Anspruch 8, wobei der Monoazofarbstoff aus der Gruppe ausgewählt ist, die besteht aus Thiazolium-, Isothiazolium-, Pyridin- und Pyridazinfarbstoffen.

**13.** Waschmittelzusammensetzung nach Anspruch 12, wobei die Azogruppe kovalent an einen Benzolring und in para-Stellung an eine -NHCOC($R_1$)=$CH_2$-Gruppe gebunden ist.

**14.** Waschmittelzusammensetzung nach Anspruch 8, wobei es sich beim Farbstoff um einen Azinfarbstoff handelt.

**15.** Waschmittelzusammensetzung nach Anspruch 14, wobei der Azinfarbstoff ausgewählt ist aus:

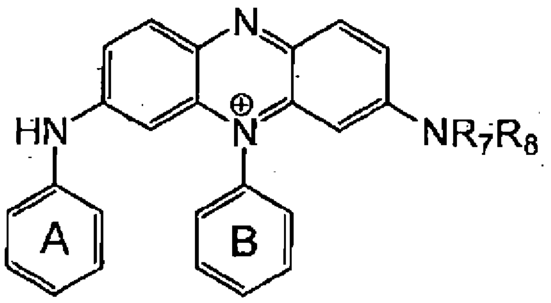

und

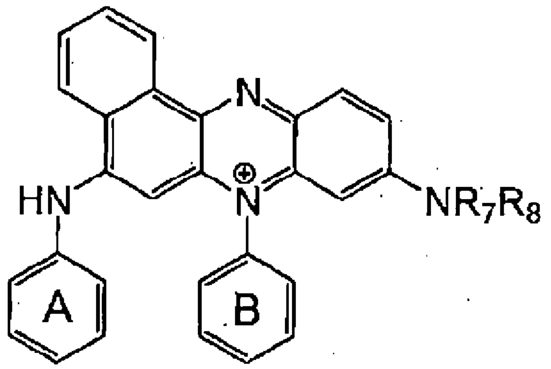

wobei $R_7$ und $R_8$ unabhängig voneinander ausgewählt sind aus H, verzweigtem oder linearem C1-C8-Alkyl; verzweigtem oder linearem C1-C8-Alkyl-NHCOC($R_1$)=$CH_2$, Phenyl, Benzyl, -COC($R_1$)=$CH_2$; und $R_7$ und $R_8$ unter Bildung einer cyclischen Alkylamingruppe verbunden sein können, und dann, wenn $R_7$ und $R_8$ keine verzweigte oder lineare Alkyl-NHCOC($R_1$)=$CH_2$- oder -COC($R_1$)=$CH_2$-Gruppe enhalten, -Y-C(R1)=CH2 an den A- oder B-Ring gebunden ist.

**16.** Waschmittelzusammensetzung nach einem der vorstehenden Ansprüche, wobei das Farbstoffmonomer ferner durch ungeladene organische Gruppen mit einem gesamten Molekulargewicht von weniger als 400 substituiert ist.

**17.** Waschmittelzusammensetzung nach Anspruch 16, wobei die ungeladenen organischen Gruppen ausgewählt sind aus $NHCOCH_3$; $CH_3$; $C_2H_5$; $CH_3O$; $C_2H_5O$; Amin; Cl; F; Br; I; $NO_2$; $CH_3SO_2$; und CN.

**18.** Waschmittelzusammensetzung nach einem der vorstehenden Ansprüche,
wobei das Comonomer ausgewählt ist aus

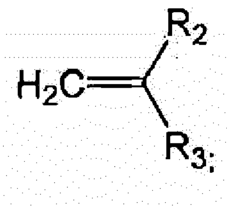
und
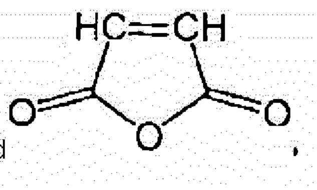
,

wobei $R_2$ und $R_3$ unabhängig voneinander ausgewählt sind aus: H, verzweigten, cyclischen und linearen C1-C8-Alkylketten; -C(O)OH, verzweigten und linearen $CO_2$C1-C18-Alkylketten; -C(O)N(C1-C18)2, -C(O)N(C1-C18)H, -C(O)NH2, heteroaromatischen Resten, Phenyl, Benzyl, Polyether, Cyano, Cl und F.

**19.** Waschmittelzusammensetzung nach Anspruch 18, wobei R2 und R3 des Comonomers ferner durch Gruppen substituiert sind, die ausgewählt sind aus:

geladenen und ungeladenen organischen Gruppen, wobei die weiteren Gruppen ein gesamtes Molekulargewicht von weniger als 400 aufweisen.

**20.** Waschmittelzusammensetzung nach einem der vorstehenden Ansprüche, wobei die Waschmittelzusammensetzung ein fluoreszierendes Mittel umfasst.

**21.** Für den Haushaltsgebrauch geeignetes Verfahren zur Behandlung eines Textilerzeugnisses, wobei das Verfahren die folgenden Stufen umfasst:

(i) Behandeln eines Textilerzeugnisses mit einer wässrigen Lösung des Farbstoffpolymers gemäß der Definition in einem der Ansprüche 1 bis 19, wobei die wässrige Lösung 10 ppb bis 100 ppm des Farbstoffpolymeren und 0,0 g/L bis 3 g/L eines Tensids umfasst;
(ii) gegebenenfalls Spülen; und
(iii) Trocknen des Textilerzeugnisses.

**22.** Für den Haushaltsgebrauch geeignetes Verfahren zur Behandlung eines Textilerzeugnisses nach Anspruch 21, wobei die wässrige Lösung 0,3 bis 2 g/L eines Tensids umfasst.

**Revendications**

**1.** Composition de détergent comprenant de 2 à 70 % en poids d'un tensioactif avec de 0,0001 à 50 % en poids d'un colorant-polymère de masse moléculaire d'au moins 500, dans laquelle le colorant-polymère peut être obtenu par polymérisation de :

(a) un monomère de colorant, le monomère de colorant un alcène lié de manière covalente à un colorant cationique chargé, le monomère de colorant ayant un coefficient d'extinction molaire à une longueur d'onde dans l'intervalle de 400 à 700 nm d'au moins 1 000 $mol^{-1}$ L $cm^{-1}$, de préférence supérieur à 4 000 $mol^{-1}$ L $cm^{-1}$, et
(b) un ou plusieurs autres comonomère(s) d'alcène(s), le(les) monomère(s) d'alcène(s) présentant un coefficient d'extinction molaire à une longueur d'onde dans l'intervalle de 400 à 700 nm qui est inférieur à 100 $mol^{-1}$ L $cm^{-1}$, de préférence inférieur à 10 $mol^{-1}$ L $cm^{-1}$, où le monomère de colorant est cationiquement chargé dans une solution aqueuse à un pH dans l'intervalle de 7 à 11, où le polymère de colorant présente une solubilité supérieure à 1 mg/L dans une solution aqueuse de dodécylsulfate de sodium à 1 g/L à pH=7.

**2.** Composition de détergent selon la revendication 1, dans laquelle le monomère de colorant est de la forme :

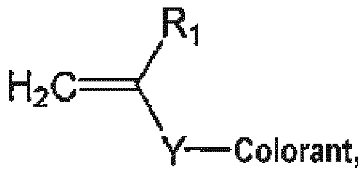

où Y est un groupe de pontage organique connectant de manière covalente un colorant à la moitié alcène du monomère de colorant et $R_1$ est choisi parmi : groupe alkyle ; aryle ; benzyle ; halogène ; ester ; amide d'acide ; et, CN.

**3.** Composition de détergent selon la revendication 2, dans laquelle le groupe de pontage organique, Y, est choisi parmi : $-CONR_4-$ ; $-NR_4CO-$ ; $-COOR_4-$ ; $-NR_4-$ ; -O- ; -S- ; $-SO_2-$ ; $-SO_2NR_4-$ ; $-N(COR_4)-$ ; et $-N(SO_2R_4)-$ ; où $R_4$ est choisi parmi : H ; groupes alkyle linéaires ou ramifiés en C1-C6 ; phényle et benzyle ; où R4 présente de 0 à 1 unité d'espacement choisie parmi : -O- ; -S- ; $-SO_2-$ ; -C(O)O- ; -OC(O)- ; et amine.

**4.** Composition de détergent selon la revendication 2, dans laquelle le groupe de pontage organique est $-NR_4CO-$ ou $-CONR_4-$.

**5.** Composition de détergent selon l'une quelconque des revendications 3 à 4, dans laquelle $R_4$ est choisi parmi : H et Me.

**6.** Composition de détergent selon l'une quelconque des revendications 2 à 5, dans laquelle le groupe Y est lié

directement à un atome de carbone d'un cycle aromatique du colorant.

**7.** Composition de détergent selon l'une quelconque des revendications précédentes, dans laquelle le colorant est un colorant organique choisi parmi les classes de chromophores suivantes : anthraquinone, azo, azine, triphénodioxazine, triphénylméthane, xanthène et phtalocyanine.

**8.** Composition de détergent selon la revendication 7, dans laquelle le colorant organique est choisi parmi les classes de chromophores suivantes : mono-azo et azine.

**9.** Composition de détergent selon l'une quelconque des revendications 2 à 8, dans laquelle $R_1$ est choisi parmi : H ; Me ; Et ; Pr ; $CO_2$ chaînes alkyle linéaires et ramifiées en C1-C4 ; phényle ; benzyle ; CN ; Cl ; et, F.

**10.** Composition de détergent selon la revendication 9, dans laquelle $R_1$ est choisi parmi : H ; et, Me.

**11.** Composition de détergent selon l'une quelconque des revendications précédentes, dans laquelle le colorant-monomère est choisi parmi : Basic Violet 2 ; Basic Violet 5 ; Basic Violet 12 ; Basic Violet 14 ; Basic Violet 8 ; Basic Blue 12 ; Basic Blue 16 ; Basic Blue 17 ; Basic Blue 47 ; et, Basic Blue 99, où le un -NH2 du colorant est converti en -NH-C(O)-CH=CH2 ou -NH-C(O)-C(Me)=CH2.

**12.** Composition de détergent selon la revendication 8, dans laquelle le colorant mono-azo est choisi dans le groupe constitué de : colorants thiazoliums, isothiazoliums, pyridine et pyridazine.

**13.** Composition de détergent selon la revendication 12, dans laquelle le groupe azo est lié de manière covalente à un noyau benzène et est para par rapport à un groupe $-NHCOC(R1)=CH_2$.

**14.** Composition de détergent selon la revendication 8, dans laquelle le colorant est un colorant d'azine.

**15.** Composition de détergent selon la revendication 14, dans laquelle le colorant d'azine est choisi parmi :

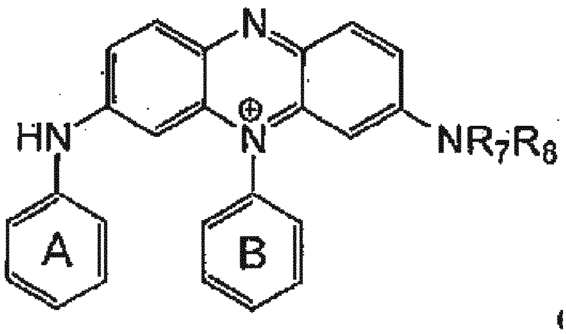

et

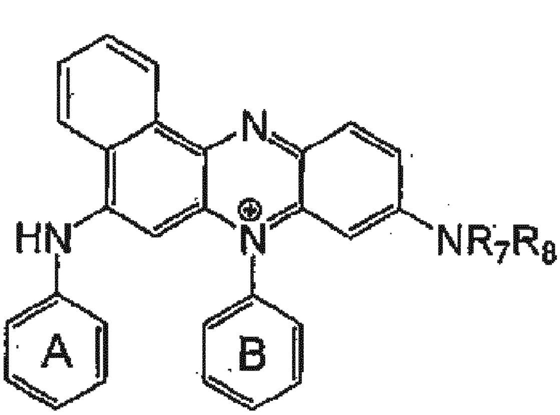

où $R_7$ et $R_8$ sont indépendamment choisis parmi H, un groupe alkyle linéaire ou ramifié en C1-C8, C1-C8 ; (alkyle

linéaire ou ramifié en C1-C8)-NHCOC($R_1$)=$CH_2$, phényle, benzyle, -COC($R_1$)=$CH_2$ ; et R7 et R8 peuvent être joints pour former un groupe alkylamine cyclique, et lorsque $R_7$ et $R_8$ ne contiennent pas un groupe (alkyle linéaire ou ramifié)-NHCOC($R_1$)= $CH_2$ ou -COC($R_1$)=$CH_2$ alors un -Y-C($R_1$)=$CH_2$ est lié au cycle A ou B.

**16.** Composition de détergent selon l'une quelconque des revendications précédentes, dans laquelle le monomère de colorant est de plus substitué par des groupes organiques non chargés présentant une masse moléculaire totale inférieure à 400.

**17.** Composition de détergent selon la revendication 16, dans laquelle les groupes organiques non chargés sont choisis parmi : $NHCOCH_3$ ; $CH_3$ ; $C_2H_5$ ; $CH_3O$ ; $C_2H_5O$ ; amine ; Cl ; F ; Br ; I ; $NO_2$ ; $CH_3SO_2$ ; et CN.

**18.** Composition de détergent selon l'une quelconque des revendications précédentes, dans laquelle le comonomère est choisi parmi :

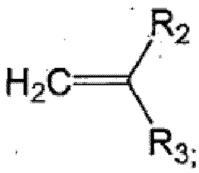 ; et, 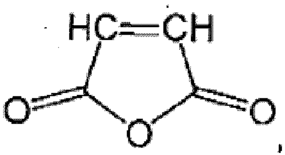 ,

où $R_2$ et $R_3$ sont indépendamment choisis parmi :

H, des chaînes alkyle linéaires, cycliques et ramifiées en C1-C8, C(O)OH, $CO_2$ chaînes alkyle linéaires et ramifiées en C1-C18, -C(O)N(C1-C18)2 ; -C(O)N(C1-C18)H ; -C(O)NH2 ; un groupe hétéroaromatique, phényle, benzyle, polyéther, cyano, Cl et F.

**19.** Composition de détergent selon la revendication 18, dans laquelle $R_2$ et $R_3$ du comonomère sont de plus substitués par des groupes choisis parmi : chargés ; et organiques non chargés, les autres groupes présentant une masse moléculaire totale inférieure à 400.

**20.** Composition de détergent selon l'une quelconque des revendications précédentes, dans laquelle la composition de détergent comprend un agent fluorescent.

**21.** Procédé domestique de traitement d'un textile, le procédé comprenant les étapes consistant :

(i) à traiter un textile avec une solution aqueuse du colorant-polymère comme définie dans l'une quelconque des revendications 1 à 19, la solution aqueuse comprenant de 10 ppb à 100 ppm du colorant-polymère ; et, de 0,0 g/L à 3 g/L d'un tensioactif ;
(ii) à éventuellement rincer ; et,
(iii) à sécher le textile.

**22.** Procédé domestique de traitement d'un textile selon la revendication 21, dans lequel la solution aqueuse comprend de 0,3 à 2 g/L d'un tensioactif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005003274 A
- WO 2006055787 A
- WO 2009040731 A
- WO 200800957 A, Ciba
- WO 2006004876 A
- EP 0128619 A
- WO 2005068596 A
- EP 1876226 A
- EP 328177 A
- EP 070074 A
- EP 346995 A
- EP 0239910 A, Proctor and Gamble
- EP 0384070 A
- WO 2007087243 A
- WO 2007087257 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- CTFA. International Buyers Guide. CFTA Publications, 1992
- **OPD.** Chemicals Buyers Directory. Schnell Publishing Co, 1993
- **POUCHER.** *Journal of the Society of Cosmetic Chemists,* 1955, vol. 6 (2), 80